# EUROPEAN PATENT APPLICATION

(11) **EP 4 778 673 A2**
(43) Date of publication of application: **22.07.2026**
(21) Application number: 24817678.6
(22) Date of filing: 13.09.2024
(51) Int. Cl.: B24B 31/00, B24B 39/00

(54) **MACHINING TOOL OR OTHER WORKPIECE COMPRISING A CERAMIC-METAL COMPOSITE MATERIAL, MACHINING PROCESS, MOTION TRANSMISSION PROCESS, MACHINING MACHINE AND COMPLEX ELEMENT**

(30) Priority: 15.09.2023 ES 202330776; 28.02.2024 ES 202430146; 02.04.2024 ES 202430241
(71) Applicant: Drylyte, S.L., 08030 Barcelona (ES)
(72) Inventor: SARSANEDAS GIMPERA, Marc, 17800 OLOT (Girona) (ES); ROA ROVIRA, Joan Josep, 43204 REUS (Tarragona) (ES); RIU PERDRIX, Guiomar, 08290 CERDANYOLA DEL VALLES (Barcelona) (ES)
(74) Representative: Elion IP, S.L.
(86) International application number: PCT/ES2024/070564
(87) International publication number: WO 2025/056831

(57) **Abstract**

A machining tool, and surface finishing process using the **DL** method, comprising a ceramic-metal composite material comprises a homogeneous surface polishing. In some implementations, the machining tool demonstrates, after polishing, a compressive tension less than -500 MPa or equal to or greater than 40% of the compressive stresses generated during the grinding process. **The** machining tool, in some implementations of the invention, along the cutting edge of a homogeneous surface polishing, demonstrates a perfect planarity between the metal elements and the ceramic elements of the tool, in such a way that the roughness of the cutting edge of the tool is of the submicrometric order. **In** some cases, the machining tool demonstrates a change in roughness between the cutting edge and the faces adjacent to the cutting edge along the homogeneous or regular cutting edge of the tool.

## Description

### FIELD OF THE INVENTION'S APPLICATION

The present invention can be applied to all types of pieces made with a polished ceramic-metal composite material where the durability of the piece is an important aspect. The ceramic-metal compound may be present only in part of the surface of the piece, or its entirety. In some examples, the ceramic-metal compound is the surface coating of a piece made of another material.

An example is machining tools, generally made of a polished ceramic-metal composite material and allowing to form a part or material by removing, extracting, separating or deforming material, for example via chip removal, abrasion or cutting.

This patent must encompass the concept of a machining tool in a broad sense, including for example, sharp tools, excavator blades, the cutting inserts of tunneling machines or hammering tools.

Machining tools are an important example, but there are other parts made of a polished ceramic-metal composite material, where its durability is important, also subject to protection under this patent.

For example, motion transmission elements such as a gear or cam can also be made of a ceramic-metal composite material, which are exposed to friction that causes wear. Another example is the parts destined for the aeronautical sector exposed to constant friction that causes their wear.

The durability of parts is a key aspect in the maintenance and repair of complex elements, such as machining equipment or one aircraft. In the maintenance and repair tasks of complex elements the replacement of parts about to reach the end of their useful life is scheduled. The replacement of these parts implies, in most cases, a stopping of the complex element with the economic costs that this stop entails.

In conclusion, an increase in the durability of the part comprising a polished ceramic-metal composite material implies its longer service life and reduces the need to replace them, as well as the economic costs linked to the operation of the complex element that includes the part comprising a polished ceramic-metal composite material, such as a machine or an aircraft.

### BACKGROUND OF THE INVENTION

Machining is a manufacturing process comprising a set of workpiece-forming operations by removing, extracting, separating or deforming material, e.g. by chip removal, abrasion or cutting.

A type of machining is one by which the material is pulled or cut with a machining tool, resulting in waste or a chip. The machining tool generally consists of one or more edges or blades that remove the chip from the part at each pass.

Some machining tools are the drill or drill bit, the cutting tool of a shaper, the broach of a broaching machine, the cutter of a lathe, or the milling cutter of a milling machine.

Machining tools are used for manufacturing with ceramic-metal composite materials (inorganic composite materials), such as cemented carbide also known as hard metal, widia vidia in German, metal carbide or tungsten carbide.

Tungsten carbide is a composite material with a heterogeneous distribution of hard ceramic particles of tungsten carbide (WC) embedded in a metal mold, usually cobalt (Co). The ceramic particles provide the final material with an elevated hardness and resistance to wear, while the metal binder provides a high fracture toughness. In addition, tungsten carbide is also a material resistant to intermediate/high temperatures.

For all the above mentioned tungsten carbide is widely used to manufacture machining tools or other types of parts where the durability of the part is an important aspect.

Parts made of ceramic-metal composite materials, such as a machining tool, are mainly post-processed by a grinding technique where an abrasive product is used, usually by a rotating abrasive wheel, which removes small material chips from the part being manufactured. The grinding process generates compressive stresses at the surface level (ranging between the initial 10 and 20 µm) of approximately -1500 to -2000 MPa depending on the metal binder content (known as binder), as well as the size of the reinforcement phase (ceramic phase) that can present ultra-fine size up to coarse size.

These compressive stresses increase the durability in working conditions of the parts; however, the roughness induced by the grinding process (in the order of 0.1 to 0.6 m in Rₐ), causes surface defects, such as local oxidative effects or nano protuberances due to a preferential polishing of the less hard phase. These surface defects do not, for example, allow the correct removal of chips by the machining tool under working conditions and thus result in a reduction in the tool life.

It is for this reason that it is necessary to reach a compromise between surface quality in terms of remnant compressive stresses, and the final degree of roughness of parts made with ceramic-metal composite materials.

Therefore, today the pieces made with ceramic-metal composite materials, such as the machining tools, which have been ground, are later polished.

Due to the extreme hardness of the ceramic-metal composite material, parts made of ceramic-metal composite material, such as machining tools, are usually polished by mechanical systems, mechanical-chemical systems (CMP), chemical systems or electrochemical systems.

Some of the well-known polishing processes result in the considerable reduction of the compressive stress layer (even disappearing), since these polishing processes extract tens of microns at the surface level. **In** particular, compressive stresses generated during the grinding process in the part, which are usually between -1500 and -2000 MPa, are reduced by between 60 and 80%. Consequently, the durability of the part after polishing is reduced because it only presents between 20 and 40% of the initial compressive stresses.

When parts made from a ceramic-metal composite material attempt to polish chemically or electrochemically, due to the differences in mechanical properties between the ceramic particles and the metal binder, the polishing is not homogeneous, producing different grades of polishing at the interface between both constituents. Also, due to the pH of the polishing liquid or the medium used in the electrochemical process, a localized selective attack is located in the metal binder, completely dissolving the metal element in the surface layers of the material to be polished, eroding this interface between a few nanometers up to a few microns, and in some cases it can reach tens of microns. This phenomenon is known as "leaching".

After polishing the part comprising a ceramic-metal composite material using a standard chemical or electrochemical process, the ceramic elements of the composite material stand out from the metal elements and therefore it is the ceramic elements that receive most of the tension generated during the machining process. This ceramic phase of the material, being the most fragile, can act as the beginning of a fracture crack, or as an element of concentration of stresses.

Ceramic-metal composite materials can consist of more than two phases; known as gamma phases. These phases, present some precipitates harder than the WC, such as the TiC, TaC, NbC, among others; the most common being the WC-(W,Ti,Ta,Nb) C-Co. These elevated hardness particles can be tungsten carbides, Titanium, Niobium, Tantalum, among others. During the mechanical finishing of parts with these gamma phase particles in their microstructure, the high difference between their mechanical properties and that of the rest of the mold generates heterogeneity and peeling that can reduce the mechanical properties on the tool surface, decreasing its performance in service conditions, together with the useful life of the tool.

The heterogeneous polishing of the surface in a specific area of the cutting tool comprising a ceramic-metal composite material, such as the edge of the tool, it causes a considerable reduction of its mechanical properties of the tool, and consequently a reduction of the durability of the tool, because it cannot evenly transmit the stresses generated on the cutting edge to the rest of the tool during the machining process.

After a thorough micro- or submicrometer scale analysis of both the geometry and the microstructure resulting from a machining tool comprising a ceramic-metal composite material and polished by conventional polishing (e.g. mechanical, CMP, chemical or electrochemical), a reduction of compressive stresses generated in the machining tool after the grinding process is observed as well as a heterogeneous polishing within a zone of the machining tool when it manifests a heterogeneous and/or complex geometry as a consequence of a greater extraction of the elements metallic regarding ceramic elements.

Conventional techniques do not homogeneously reduce the roughness inside the cutting edge and cause the removal of the chip under working conditions to be unsteady; causing hot spots in the interior channel, causing a reduction in its durability.

Similarly, on a machining tool comprising a ceramic-metal composite material and polished by conventional polishing (e.g., mechanical, CMP, chemical or electrochemical), a heterogeneous or irregular roughness change is observed between the cutting edge and the faces abutting the cutting edge along the cutting edge of the tool.

In the particular case of drills or milling cutters, the performance in service of these cutting tools depends on a property called the *K*-factor. The *K*-factor, which is a parameter that characterizes the micrometric geometry of the cut-off angle, is defined as the relationship between the detachment surface and the main incidence surface (S_{γ}/S_{α}). Its optimum value depends on the material to be machined with this tool, *K* = 0.7-0.8 being the optimal for tungsten carbide drill bits or milling mills for machining titanium alloys, and *K* = 1 for tungsten carbide drill bits or milling mills for machining other metals, such as aluminum materials, iron, etc. as well as their respective alloys. Achieving these *K*-factors by maintaining the flatness between the different metal and ceramic constituents present in the microstructure of composite materials is impossible by conventional polishing methods.

For some specific applications, in order to increase some mechanical performance of the surface of the cutting tools, a coating after the machining and polishing or finishing stage is applied. Normally, to increase the cutting capacity of the tool as well as durability in extreme operating conditions (e.g.: temperature, lubricating agents, etc.), these coatings have a higher hardness, as well as corrosion resistance than the ceramic-metal substrate, which in turn is detrimental to its toughness. The fragility that characterizes the coatings makes them susceptible to the nucleation and propagation of cracks, which can penetrate the substrate, generating a catastrophic defect for the tool itself. Therefore, there are methods of reducing and/or eliminating defects, such as dropplets, which are the result of the deposition process, before it penetrates the tool mold. If the critical defect area is removed without compromising the integrity of the rest of the tool during this process, it can be put back into use after the subsequent coating of the previously stripped area. In these processes, using conventional methods, such as mechanical processes, there is a high possibility propagating the compromise of the mechanical or surface integrity of the tool. This means a low probability of success during the recovery or repair process of a cutting tool that has a defect in its coating.

Another problem generated during the polishing of a piece comprising a ceramic-metal composite material is the heterogeneity of the polishing between different areas of the piece, for example, between the cutting edge of the machining tool and the chip evacuation areas that are usually concave.

During the polishing process through a chemical or electrochemical process, areas with greater electrolyte mobility are more polished than areas with lower electrolyte mobility. The change of roughness between the areas of a polished cutting tool by a chemical and/or electrochemical polishing process is heterogeneous or irregular.

This situation also causes the stresses applied on the cutting edge to be transmitted heterogenically or irregularly to the rest of the machining tool, thus reducing the durability of the machining tool.

In addition to the durability of the tool, the lack of homogeneity or regularity of the cutting edge and/or a lack of homogeneity or regularity in the change of roughness between the areas of a tool can lead to a reduction in the precision of the machining, as well as an increase in machining time and energy used to perform machining.

Parts made with other ceramic-metal composite materials, such as Ti(C,N)-FeNi, among other composite materials or cermets, present the same problem once polished by mechanical, CMP, chemical or electrochemical polishing.

Thus, the aim of this invention is a new machining tool or another type of part comprising a polished ceramic-metal composite material with a greater durability than those polished using conventional processes.

### PURPOSE AND SUMMARY OF THE INVENTION

The present invention can be applied to all types of pieces made with a polished ceramic-metal composite material where the durability of the piece is an important aspect. Machining tools are an important example, but there are others such as motion transmission parts, such as a gear, cam or bearing, or parts intended for the aeronautical sector.

The invention also covers parts manufactured with materials that present two or more different phases and that present a high difference in their chemical nature and as a consequence in their physical, mechanical and electrochemical properties, resulting in a surface treatment or heterogeneous leveling depending on the speed of interaction between the medium and each constituent. Examples may be, for example, iron castings or aluminum alloys with a high concentration of silicon.

The purpose of this invention is a machining tool or other type of part comprising a ceramic-metal composite material, which maintains the highest percentage of compressive stresses generated by the grinding process after post-processing (polishing), in order to increase the durability of the cutting tool or other type of part, its precision, while reducing the time and energy required in the machining process.

Also the subject of this invention is a machining process carried out with a machining tool with a ceramic-metal composite material, a motion transmission process with a piece with a ceramic-metal composite material, a machining machine comprising a machining tool with a ceramic-metal composite material and a complex one-piece element with a ceramic-metal composite material, such as an aircraft.

The durability of parts is a key aspect in the maintenance and repair of complex elements, such as machining equipment or aircraft. In the maintenance and repair tasks of complex elements the replacement of parts about to reach the end of their useful life is scheduled. The replacement of these parts implies, in most cases, a stopping of the machine or complex element with the economic costs that this stop entails.

In conclusion, an increase in the durability of the part comprising a polished ceramic-metal composite material implies a longer service life and thus reduces the need for replacement, as well as the economic costs linked to the operation of the complex element that includes the part comprising a polished ceramic-metal composite material, such as a machine or an aircraft.

The invention refers, at least in part, to a machining tool, including a cutting and/or drilling tool comprising a metal-ceramic composite material, or another type of part comprising a homogeneous surface polishing.

The invention also covers the polishing method, including both the process and the electrolyte, by which the tool is polished, achieving the benefits detailed in the present report.

In this description machining tool means the inclusion of applications, characteristics and uses such as turning, drilling and milling, profiling, brushing, sawing, cutting and broaching.

A homogeneous surface polishing according to the present invention includes, in some implementations, a ceramic-metallic interface with a roughness between 20 and 100 nm. In some implementations, the roughness is less than 20 nm. Examples of homogeneous roughness according to the present invention include roughness less than 15 nm, less than 10 nm less than or equal to 5 nm.

Surface or superficial means any part of the tool in contact with the surrounding medium, such as the part to be machined. In particular, the homogeneous surface polishing includes the polishing of the edge and/or the surface faces adjacent to the edge.

The purpose of the present invention includes a cutting and/or drilling tool comprising a ceramic-metal composite material that maintains the highest percentage of compressive stresses generated by the grinding process after the polishing process, and allows the homogeneous transmission of the stresses applied in the cutting edge during its use to the rest of the tool, and indirectly through the applied polishing process increases its durability under the conditions of operation.

Also the subject of this invention is a machining process carried out with a machining tool with a ceramic-metal composite material, a motion transmission process with a piece bearing ceramic-metal composite material, a machining machine comprising a machining tool with a ceramic-metal composite material and a complex element including a part with a ceramic-metal composite material, such as an aircraft.

### EXPLANATION OF THE INVENTION

According to the present invention, the machining tool comprises a ceramic-metal composite material, including in some implementations, tungsten carbide (WC), W(Ti,Ta), W-Co or Ti(C,N)-Feni, among others, and a homogeneous surface polishing. In some implementations, the metallic binder included in the mold comprises cobalt, nickel, iron, chromium or their combinations in different proportions.

In particular, the machining tool or other type of part comprising a ceramic-metal composite material that is the purpose of the invention comprises, after polishing, a compressive tension of less than -400 MPa. Preferably, the compressive tension after polishing is less than -500 MPa, less than -1000, less than -1500, less than -2000. In a concrete implementation of the invention the compressive tension after polishing is between -1600 and -1800 MPa.

The grinding process generates compressive stresses in the workpiece between -1500 and - 2000 MPa, usually between -1600 and -1800 MPa. The machining tool or other type of part comprising a ceramic-metal composite material subject to the invention comprises, after polishing following the grinding, a compressive tension of at least 25% of the initial compressive stresses prior to polishing. Preferably, the compressive tension after polishing is at least 40, or 50, or 60, or 70, or 80, or 90, or 99% of the initial compressive stresses. In a specific implementation of the invention, the compressive tension after polishing is between 80 and 90% of the compressive stresses generated during the grinding process.

In some of the preferred implementations, the pieces comprising a ceramic-metal composite material purpose of the invention include compressive stresses after the grinding and post-polishing process of between -1280 and -1620 MPa. Consequently, the durability of the cutting tool is not reduced to the degree reduced when polishing the said piece via traditional polishing process, this being the standard mechanical-chemical polishing process.

Compressive stresses can be measured on the part using X-Ray Diffraction (XRD) techniques and analyzed using the sin²ψ. method.

The polishing process to obtain the part that is the purpose of the invention preferably comprises an ionic transport stage between the piece to be polished, and a set of solid particles comprising a liquid electrolyte inside and water coated with a liquid, less conductive than solid particles, not miscible.

In some cases, in this polishing process, two solid particles come into contact or a solid particle comes into contact with the piece to be polished, an ion exchange occurs, thus allowing electrical conductivity between solid particles or between the solid particle and the piece to be polished.

Unlike other electrochemical methods, restricting the ion transport to the surface protrusions, due to the contact between conductive particles and these protrusions, results in more precise polishing in terms of achieving less material extraction in order to reach the desired surface finish. In addition, this polishing process modifies the surface state (whether for its applications in tribological conditions, impact, etc.), without modifying the internal stresses or any other microstructural condition.

In tools that have a coating after the machining and polishing or finishing stage, it is possible that cracks appear in the coating and that its propagation to the substrate compromises its structural integrity in service conditions, being possible to reduce its durability. By means of polishing methods comprising conductive solid particles, according to the present invention, it is possible to remove this layer once it is detected that the coating has one or more cracks, without damaging the substrate, allowing its reuse through a coating process and in this way increasing the useful life of the tool and reducing the associated costs. The present invention covers treatments to extend the useful life of tools comprising a ceramic-metallic mold and a coating. In some cases the tools are coated with monolayer or multi-layer coatings with different bilayer periods as well as different ceramic systems such as binary (for example: CRN, Tin, ZrN, etc.), ternaries (e.g. TiAlN, TiSiN, AlCrN, etc.) and/or quaternaries (e.g.: AlCrSiN, etc.)

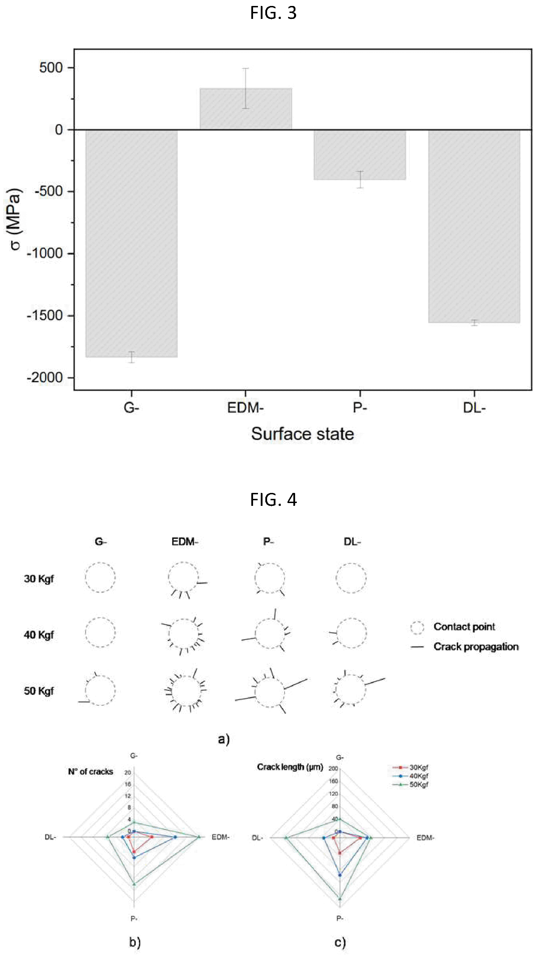

Figure 3 shows that a piece after a grinding process has a compressive tension of approximately -1800MPa. If this same piece is polished after the grinding process by an EDM process, compressive stresses are completely eliminated and tractive stresses are generated. If this same piece is polished after the grinding process by a mechanical-chemical polishing process (P), the residual stresses after the polishing process are approximately 400 MPa. Finally, it is observed that if this same piece is polished after the grinding process by a DL process, the residual stresses after the polishing process are approximately -1600 MPa.

Figure 4 shows schematically the different damages obtained in the piece under spherical indentation tests for the different surface states most common at the industrial level: a grinding process, an electrical discharge machining (EDM) process, mechanical polishing (P) after grinding or with a polishing by solid conductive particles, according to the present invention, after grinding.

Figure 4b shows the number of cracks generated in the piece under spherical indentation tests for the most common industrial surface states: a grinding process, electrical discharge machining (EDM) process, mechanical polishing (P) after grinding or polishing by solid conductive particles, according to the present invention, after grinding.

Figure 4c shows the length of the cracks generated in the piece under spherical indentation tests for the most common industrial surface states: a grinding process, electrical discharge machining (EDM) process, mechanical polishing (P) after grinding or polishing by solid conductive particles, according to the present invention, after grinding.

It can be observed that the durability (fewer cracks and shorter crack length) of a piece polished by solid conductive particles, according to the present invention, after the grinding process, is greater than the same piece polished by EDM or P after the grinding process.

In particular, when the polished piece comprising a ceramic-metal composite material that is the purpose of the invention is a machining tool, the tool presents along the cutting edge a flatness between the metal elements and the ceramic elements of the tool. In this invention, planarity is grasped when the roughness is of the submicrometric order, that is equal to or less than one micron, in particular, below 20 nm.

This feature allows the stresses applied on the cutting edge to be transmitted homogeneously to the rest of the cutting tool, thus increasing the durability of the cutting tool.

Preferably, the machining tool has a roughness at the cutting edge below 20 nm, below 15 nm, below 10 nm or below 8 nm.

Preferably, the machining tool demonstrates a homogeneous or regular roughness change between the cutting edge and the faces adjacent to the cutting edge along the cutting edge of the tool.

Again, this feature allows the stresses applied on the cutting edge to be transmitted homogeneously to the rest of the cutting tool, thus increasing the durability of the cutting tool.

Polishing methods by conductive solid particles are especially effective in reducing the roughness homogeneously of all constituents present in the surface microstructure of the material. This includes, in some cases, precipitates known as phase gamma, of high hardness. The tools according to the present invention, include in some cases a homogeneous polishing without demonstrating defects related to the difference between the properties of these particles and the rest of the phases present in the mold.

As already explained in the preceding ones, the K-factor is a critical variable when defining in-service performance for cutting tools. The purpose of the present invention is a cutting tool, polished, comprising a material composed of a metal-ceramic mold with the K-factor required according to each inventive implementation as detailed in this report, depending on the material to be machined, and that, in turn, retain at least 40%, or 50%, or 60%, or 70%, or 80%, or 90%, or 99% of compressive stresses prior to the polishing process.

In particular, the invention comprises a cutting tool, polished, comprising a material composed of a metal-ceramic mold with the K-factor required in function of each inventive implementation as detailed in this report, depending on the material to be machined, and which, in turn, retain at least 40%, or 50%, or 60%, or 70%, or 80%, or 90%, or 99% of compressive stresses prior to the polishing process. In some implementations, these tools present a height difference between the different constitutive phases of the order of the few nanometers a nanometric levelingleveling and even lower between the different micro constituents of the mold. More specifically, the invention covers this tool, demonstrating the aforementioned degree of flatness, minimizing the defects of regrowth or attack located in the metal mold.

### BRIEF DESCRIPTION OF THE DRAWINGS

To complement the description and in order to aid with a better understanding of the characteristics of the invention, a few pages of drawings in which of an illustrative and not limitative character is accompanying it as an integral part, with the following represented:

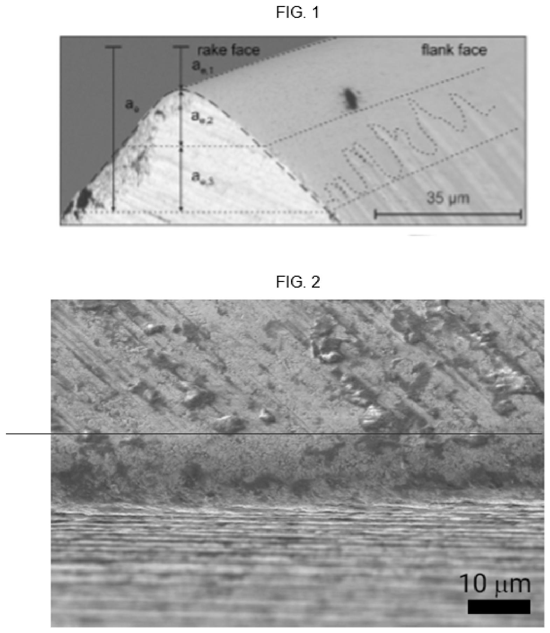

Figure 1 - shows a perspective section of a machining tool area where the cutting edge and the faces adjacent to the cutting edge are observed. In this figure it is observed that the change of roughness between the cutting edge and the adjoining faces is not constant along the cutting edge of the tool
Figure 2 - shows the top view of a machining tool area where the cutting edge and the faces adjacent to the cutting edge are observed. In this figure it is observed that the change of roughness between the cutting edge and the adjoining faces is constant along the cutting edge of the tool and that within the cutting edge area the polishing is homogeneous.
Figure 3 - shows a representation of the tension generated in a ceramic-metal sample for the three most common types of surface finishes, along with the one described in the present invention; a grinding process and EDM, and the residual compressive stresses after the polishing process P or by conductive solid particles, according to the present invention (DL) on the surface of a piece starting in both cases from a ground surface (same compressive stresses as those presented in the graph for the sample -G).
Figure 4 - shows a schematic representation of the different damages obtained in a piece under spherical indentation tests as a function of the radar maps P, (b) and (c) comparing the damage induced for the different surface states (after a grinding process and EDM, and after a polishing process by conductive solid particles, according to the present invention (DL), depending on the number of cracks and the length of the cracks, respectively.

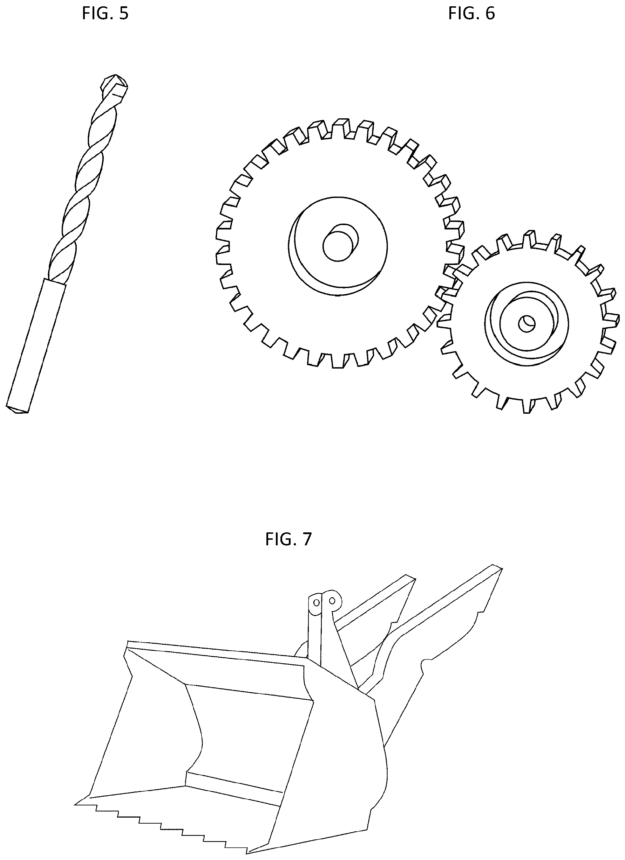

Figure 5 - shows a bit comprising a ceramic-metal composite material with a homogeneous polishing.
Figure 6 - shows a set of gears comprising a ceramic-metal composite material with a homogeneous polishing.
Figure 7 - shows an excavator shovel comprising a ceramic-metal composite material with a homogeneous polishing, according to the present invention.

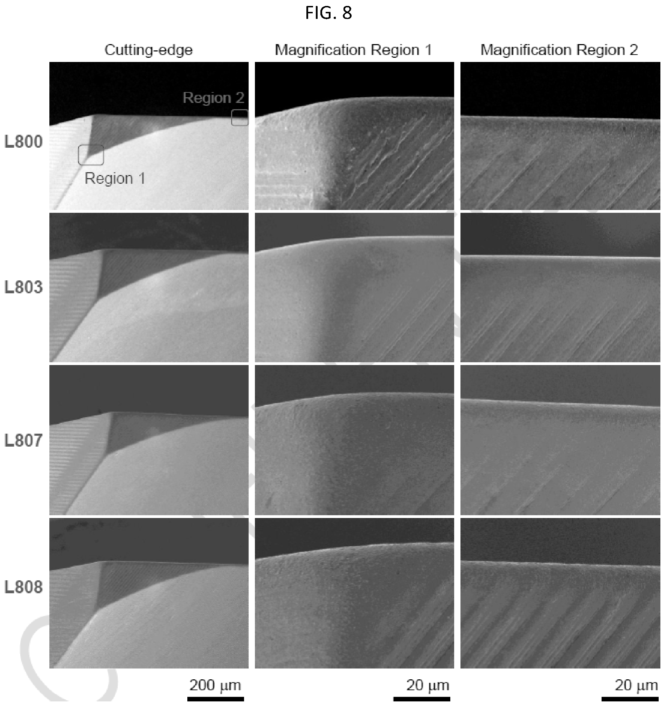

Figure 8 - shows micrographs taken by a scanning electron microscope on the cutting surfaces of a machining milling cutter, made of tungsten carbide, in which the surface result obtained can be compared, as for polishing penetration and level of flatness between constituents, after being processed keeping the electrical parameters constant and as the only variable using four different electrolytes (L800, L803, L807 and L808) described later in the examples, according to the present invention.

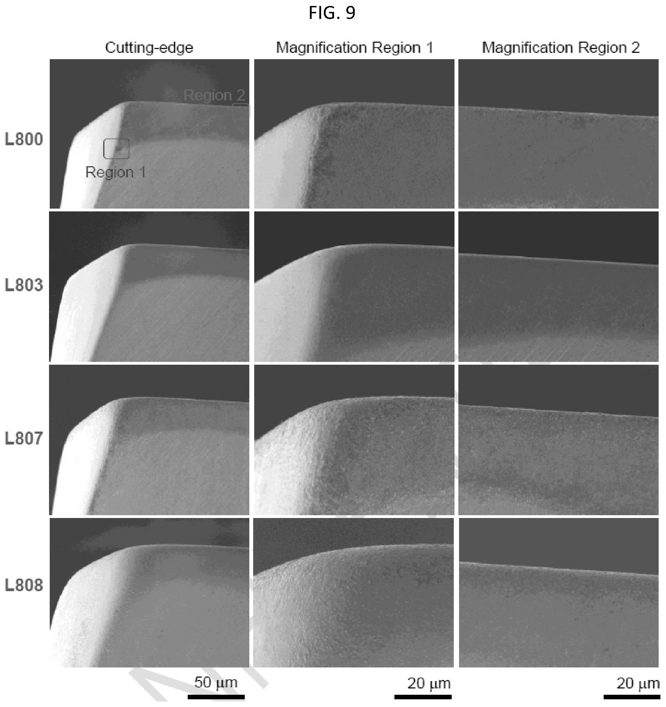

Figure 9 - shows micrographs taken by scanning an electron microscope on the cutting surfaces of a micro drill, made of tungsten carbide, in which the surface result obtained can be compared, in terms of polishing penetration and level of flatness between constituents, after being processed, keeping the electrical parameters constant and as a single variable using four different electrolytes (L800, L803, L807 and L808) described later in the examples, according to the present invention.

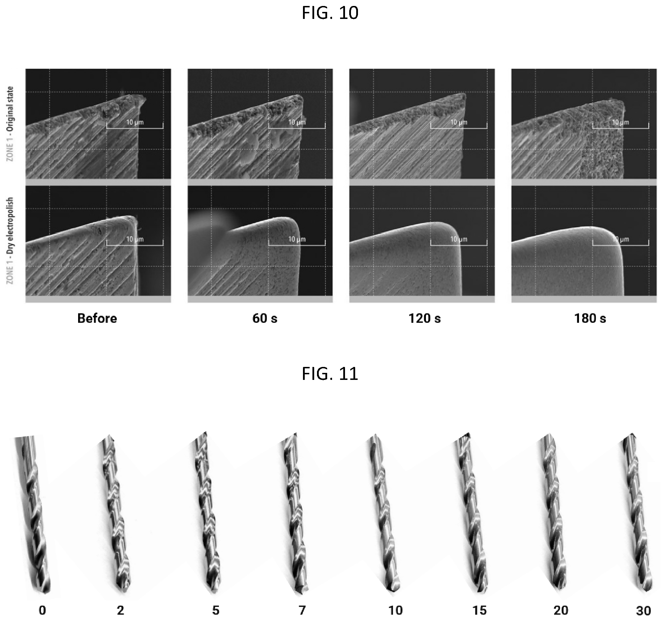

Figure 10 - shows the course of the increase in the cutting radius of a tungsten carbide tool depending on the polishing time, according to the present invention.
Figure 11 - shows the course of the stripping level of a titanium nitride (TIN) coating deposited on a tungsten carbide substrate depending on the polishing time, according to the present invention.

### PREFERENTIAL IMPLEMENTATIONS OF THE INVENTION

One preferred implementation for obtaining the machining tool that is the purpose of the invention is through an electrochemical polishing process, which comprises an ionic transport stage between the piece to be polished and a set of solid particles of ionic transport which, in some cases, comprise a liquid electrolyte inside. In some implementations the particles include water. In some implementations, particles are coated with a less conductive liquid than solid particles, in some cases not miscible with any of the other constituents.

In this polishing process two solid particles come into contact or a solid particle comes into contact with the piece to be polished, an ion exchange occurring thus allowing the electrical conductivity between solid particles or between the solid particle and the piece to be polished.

Solid particles, according to the polishing method covered by the present invention DL, can be ceramic, polymeric, organic, inorganic, of vegetable origin, etc.

Preferably the conductive particles are ion exchange resin, since in this manner they favor ionic conductivity. More preferably, the particles are cation exchange resin, as in this way they are able to capture metal ions extracted in electropolishing processes and maintain the initial properties.

Ion exchange particles with macroporosity are usually called macroporous particles and microporous particles are called gel-like particles. Both types are suitable for use in this invention.

Preferably, the particulates have a liquid holding capacity of between 20 and 100% by weight of the water mass in relation to the total mass, in particular between 40 and 100% by weight of the water mass in relation to the total mass, more particularly between 40 and 70% by mass weight in water with respect to the total mass.

In some implementations, the particles retain an acid to promote ion exchange.

The functional groups present in the exchange resin can be cationic exchange such as sulfonic acid/sulfonate, carboxylic acid/carboxylate; anionic exchange such as amine/ammonium, quaternary ammonium; or chelating type such as iminodiacetic, aminophosphonic, polyamine, 2-picolilamine, thiourea, amidoxime, isotiouronium or bispicolilamine, as these groups are indicated for ion capture and contribute to electropolishing.

The base polymer can be a polymer based on monomers such as styrene and derivatives, such as divinylbenzene, acrylate type, methacrylate and its derivatives with different functional groups, or phenolic resins, among others. Preferably, solid particles are resins of a copolymer of styrene and sulphonated divinylbenzene, either with a gel-like structure, macroporous structure or other, since they are capable of capturing ions and have good electrical, chemical and mechanical stability.

When the electrolytic medium is used in electropolishing processes, transmission occurs at the particle/surface contact points, i.e. only at peaks of surface roughness. Therefore, it is possible to adjust the effect of the electrolytic medium by the shape of the particles.

The particles can flow through the surface of the piece to be polished to produce a homogeneous effect throughout its surface. One shape that favors the motion of particles on the surface to be treated in a general way is the spherical one. In some cases the particles are substantially spheres or feature spherical geometry, as this facilitates their bearing by a wide variety of geometries. Preferably, the set of spheres has a central value between 50 micrometers and 2 mm. By geometry, this measure favors the elimination of roughness typical of the machining of tools.

Preferably, it is possible to use a set of spheres with a bimodal particle size distribution to obtain the speed provided by large particles, and the polishing of details provided by smaller particles.

Depending on the geometry of the surface to be polished, it may be useful to use other shapes that better suit that need. Such as discs, cylinders, bars, fibers, cones, pointed forms, etc. In some cases, it is preferable to use fragments of crushed particles, which favors access to areas with a small radius in their concavity.

There are commercially available poly(styrene-divinylbenzene) sulphonated gel or macroporous type cation exchange resin spheres that are preferably used for this invention. In some cases the electrolyte used in the present invention includes particles that moderate the chemical activity, capable of neutralizing the galvanic residues emitted during the polishing process, such as, for example, weak-based anion exchange resins composed of an acrylic spine crosslinked with divinylbenzene and functionalized with a tertiary amine.

Below are some of the components included in the electrolytes used in some implementations of the invention, DL.
- Retained water:
   Solid electrolyte particles retain a certain amount of water. The retained water is responsible for dissolving oxides and salts that form on the surface to be polished during the electropolishing process. In addition, it is water or, rather, the water-plus-particle assembly, the transmitter of electrical conductivity, probably through an ion transport mechanism.

Before preparing the electrolyte medium, preferably solid particles with liquid retention capacity are washed with distilled water and partially dried so that they are able to retain the liquid. After this process the particles still contain a certain amount of water, which is retained in the electrolyte particles and not free; that is, after this process, in some cases, the particles do not leak the retained water. In some implementations of the invention, the particles are washed once or several times with water at a temperature between 60 and 200 °C, preferably between 60 and 150 °C, particularly above the boiling point. The washing of the resins is carried out in order to remove the excess of possible acid residues present in the solid structure. In some cases, it is preferable to perform the washing process until the pH of the washing water is between 4 and 7, particularly between 5 and 7, and in particular 5.4 or similar.

Preferably, ion exchange resin particles retain a quantity of water between 10 and 50% of water mass with respect to the total mass. This amount ensures that there is enough liquid to produce a solubilizing effect of salts.

Water retained in particles can come from a particle cleaning process. That is, a set of particles with the ability to retain liquid is subjected to a washing process comprising a final stage of washing with water. Preferably the water used for washing is distilled water with a conductivity of less than 10 microns/cm. This low conductivity keeps the electrochemical process controlled.
- Less conductive liquid:
   The main characteristic of this liquid is that it is less electrically conductive than conductive particles. The conductivity of the less conductive liquid is, for example, 90%, or 50%, or 20%, or 5%, or 1% less than conductivity of conductive particles.

As it intervenes in electrochemical processes, the less conductive liquid, in some cases presents a high stability both chemical and thermal, due to the high temperatures located during the electro polishing process.

**The** less conductive liquid is, in some cases, not miscible in water so that it does not mix or diffuse with the water retained in the particles.

**In** other cases the non-conductive liquid is water, and in others it is a mixture, in some cases miscible, and in other cases not miscible, of water and other non-conductive liquids.

**In** addition, this less conductive liquid must be kept in a liquid or fluid state in the working range. Since the process includes distilled water, the working range is, in some cases, between 0 and 100 °C. **The** working range is preferably below 60 °C.

Since solid particles behave like a granular material, in some cases it is convenient for the less conductive liquid to act as a lubricant or fluidifying agent or a combination of both characteristics.

**The** lubricating effect of the less conductive liquid favors the decrease of the friction force between two bodies. On the one hand, the friction between two conductive particles and on the other the friction between the conductive particles and the piece to be polished. **In** both cases, the amount of less conductive liquid expelled due to a conductive particle contacting another conductive particle or the piece to be polished is reduced, all resulting in a less aggressive and more controlled polishing process, bearing the consequence of reducing the intensity in the polishing process.

**The** fluidifying effect of the less conductive liquid favors the decrease of the viscosity of the assembly of conductive particles plus less conductive liquid. By modifying the rheological properties of the whole, it is possible to modify the fluid dynamics of conductive particles when circulating on the metal surface. By increasing the ratio of liquid (less conductive) to conductive particles it is possible to decrease the viscosity of the whole to the detriment of conductivity. The higher the amount of liquid (less conductive), the lower the density of conductive particles that transmit the electric field from cathode to anode, resulting in a lower surface treatment speed.

Less conductive liquids that can be used in this application include, but are not limited to, aliphatic and/or aromatic hydrocarbons, silicones, organic solvents, fluorinated solvents, fatty acids, fatty alcohols, glycols, sulfoxides, among others. In some cases, these less conductive liquids may be mixed in a solvent, such as distilled water (in some cases the liquid such as silicone, hydrocarbon, will be less than the conductivity of the distilled water).

The ratio of the solvent to the hydrocarbon is, for example, 5:1 although it may be lower as 4:1, 3:1.

Due to their electrical, chemical and thermal stability properties, silicones are of particular interest in this application.

Liquid silicones demonstrate high thermal and chemical stability, as well as acting as electrical insulation in addition to having lubricating properties. These features make it an excellent candidate for this application. All this contributes to its effect on the solid electropolishing processes of this invention.

In this text, silicone is broadly understood to include all those compounds, oligomers or polymers comprising the siloxane group, general formula [-OSiR 2-] n, whether linear, branched or cyclic. The R group is preferably a hydrocarbon group, such as for example without limiting purpose, methyl, ethyl, n-propyl, /so-propyl, te/f-butyl, n-hexyl, cyclohexyl, phenyl, among others.

A group of liquid silicones of preferential use are those comprising poly(dimethylsiloxane), since they have a low viscosity and are non-toxic. Preferably, lower viscosity liquid silicones with a dynamic viscosity of less than 20 cp are used, preferably in the range of 1 to 10 cp at 25 °C.

Cyclic liquid silicones like cyclosiloxanes such as octamethylcyclotetrasiloxane D4, decamethylcyclopentasiloxane D5, or dodecamethylcyclohexasiloxane D6, are also of preferred use due to their good solvent properties. Due to their volatility, cyclohexanes are preferably used in low temperature applications.

The amount of silicone added to the particles may vary depending on the dimensions and shape of the piece to be polished. Surfaces with cavities and corners that cause low particle mobility gain better results with a higher proportion of silicone.

When you want to polish the pieces with cavities, the less conductive liquid tends to accumulate in the valleys (cavities) of the pieces to be polished while the electrically charged solid particles accumulate in the peaks. This situation results in a situation where polishing by the assembly of solid conductive particles within a less conductive liquid does not evenly polish the pieces with cavities.

Hydro-repellent elements, such as hydrocarbons, for example aliphatic hydrocarbons, are another less conductive liquid that contributes to the polishing process of parts with cavities. Thanks to its physicochemical characteristics, the hydro-repellent element cohesifies the particle set, a circumstance that allows the particle set to penetrate the cavities of the pieces and thus achieve a more homogeneous polishing.

The non-conductive liquid comprising a hydro-repellent element can be obtained in an electrolytic medium (set of conductive particles plus less conductive liquid) that combines two antagonistic phases. On the one hand, the hydro-repellent element is water-repellent and on the other hand the solid particles with water inside are hydrophilic. This combination contributes to the electrolytic medium (a set of conductive particles plus liquid less conductive with the hydro-repellent element) being more cohesive and penetrates more homogeneously into the cavities of the piece to be polished and performs the most homogeneous polishing.

In one implementation, the less conductive liquid with the hydro-repellent element also comprises a surfactant element.

The surfactant element varies the effect of maintaining conductivity between solid particles, depending on the separation between them. The surfactant contributes to adjusting the meniscus morphology of the conductive fluid, usually contained within solid particles, which is generated between two solid particles, when in contact or nearby. This feature helps to adjust the conductivity, or the passage of an electrical current, between solid particles.

An example of the application of an electrolytic medium composed of a set of particles containing an acid and water, with particles surrounded by a less conductive liquid comprising a hydro-repellent element is as follows:
Electrolytic medium for polishing ceramic-metal composite materials, and in particular carbides: a less conductive liquid (200 of aqueous medium + 40 gr aliphatic hydrocarbon) + 500 gr of solid particles containing an acid and aqueous medium at 50%.

The polishing of parts via an electrolytic medium composed of a set of particles and water, being the particles surrounded by a less conductive liquid comprising a hydro-repellent element, can be performed through the immersion of the piece into a bucket with an electrolytic medium, but could also be performed by projecting the electrolytic medium on the piece to be polished.

Apart from hydrocarbons, surfactants and silicones, it is possible to use other chemical elements that do not make a significant contribution in terms of conductivity, as defined above. There are chemical compounds that have presented a synergy between conductive solid particles, their distribution and mobility in water, and their ability to coat metal surfaces. These compounds are used to protect the surface of the metal from possible excessive attacks that may occur during the polishing process, acting as a resistive layer. Compounds with such synergies include, for example, fatty acids (C8 - C20), fatty alcohols (C2 - C20), glycols (C2 - C20) and organosulfur compounds such as sulfoxides (C2 - C20), particularly dimethylsulfoxide (DMSO). Other compounds with properties similar to those detailed below also fall within the scope of protection of the present invention.

In some implementations of the invention, the elements included in the less conductive phase have the following properties: A molecular mass between 50 and 300 g/mol and a polarity (dipole, D) between 4.5 and 1. In some cases, its melting point is between 150 and 300°C and melting point between 0 and 60°C. In some implementations of the invention these substances have a dielectric constant located between 1 and 50. In some cases, the substances used in the present invention have an acid/base character both acid (pKa = 4 - 5), slightly acid (pKa = 14 - 16), as approximately neutral and with a hydrophilicity either high, moderate or low.

Liquids with high solvent properties of salts or ionic compounds, particularly sulfoxides, more particularly dimethylsulfoxide (DMSO) are used in some implementations of the present invention. Sulfoxides are organosulfur compounds with the general formula R-S(=O)-R'. In DMSO, both R-groups are methyl (CH₃), resulting in the formula (CH₃)₂SO. This molecule presents polarization, distribution and homogeneous dissolution in water and properties that make it an excellent candidate to be added to the water present in the non-conductive fluid that surrounds the conductive solid particles, and that covers the metal part, forming a resistive layer around the piece during the working pulse, generating as a consequence a greater homogeneity of polishing and fewer defects due to the localized attack or regrowth of the metal binding phase present in the microstructure. The addition of DMSO not only modulates the resistivity of the polishing process, but also affects the viscosity of the assembly, giving it a shape memory, particularly interesting in applications or parts that present an extrusion or revolution geometry.

A fatty acid is an organic molecule with a long hydrocarbon chain and a terminal carboxyl group, which has a non-zero polarization. They are found in natural fats and oils. They can be saturated, without double bonds, such as stearic acid or octanoic acid, and unsaturated, with one or more double bonds. These are divided into monounsaturates, with a single double bond, such as oleic acid, and polyunsaturates, with two or more double bonds, such as linoleic acid. The properties mentioned above, together with their high polarity, make these molecules an excellent candidate for adding to the water present in the non-conductive fluid that surrounds the conductive solid particles in some implementations of the present invention, and that covers the metal part, forming micelles and structures capable of migrating to the metal surface under an electric field and coating it with a resistive layer during the working pulse, generating as a consequence a greater homogeneity of polishing and fewer defects due to the localized attack or regrowth of the metal binding phase present in the microstructure. Fatty acids, depending on their proportion to the polar and apolar liquids present in the non-conductive fluid surrounding the conductive solid particles, can alter the flow of the whole depending on their proportion and the length of the hydrogen-carbonated chains. They act as lubricants in small proportions (0.1 - 10 % by weight) and short chains (<C10), however, at higher proportions and longer chains, they can have the opposite effect. All this can cover a spectrum as to the depth of the polishing along specific geometries, depending on the polishing time.

Some implementations of the present invention include fatty alcohols, such as dodecanol or hexadecanol, and glycols, such as ethylene glycol or propylene glycol, which consist of hydrocarbon chains containing one or several hydroxyl groups, respectively. Fatty alcohols can be saturated or unsaturated and have properties similar to fatty acids. Glycols are known for their high solubility in water and are commonly used as solvents, containing properties similar to sulfoxides. They are also molecules that manifest a dipolar moment and have the necessary properties to act as resistive protectors of the metal surface.

On the other hand, as mentioned above, a second aspect of the present invention refers to a method of dry electropolishing with the described electrolytic medium.

The described electrolytic medium is not, by itself, sufficient to produce a satisfactory electropolishing effect on inorganic composite materials. The electrolytic medium is complemented by the method, especially with the type of current applied, to obtain optimal results.

In some implementations these solid particles are projected on the tool to be polished. In other implementations the tool is immersed in a granulated compound that includes these particles. This granulated compound includes a gaseous element between groups of particles in some cases and regions of the compound. In other implementations the granulated compound is immersed in a liquid medium. Examples of a liquid medium include a liquid electrolyte equal to or different from solid particles, or an electrically neutral moderator liquid or less conductive than a conventional electrolyte.

A process that includes electrically charged solid particles, such as the DL method, allows to modulate the radius of the cutting area, as well as generating a profile or a homogeneous polishing front (see Figures 1, 8 and 9), and thus able to establish a tolerance between the cutting edge and the roughness change border.

Examples of the DL polishing processes, appliances and systems used in such technology include polishing by electrically charged solid particles, e.g., porous solid particles that include, for example, by absorption, a liquid that provides electrical conductivity to such solid particles. These examples of the method and electrolyte with which this tool has been polished are detailed in the section of examples.

Example 1 describes the polishing method of a machining milling cutter and a micro drill, made of tungsten carbide, the results of which after being polished with different electrolytes can be seen in Figures 8 and 9 respectively. In the micrographs made by means of a secondary electron detector emitted by a scanning electron microscope you can observe how the level of flatness obtained after all treatments is micrometric in order. After applying the various polishing processes, a radius of 8 micrometers is obtained in the cutting thread for the machining milling cutter and 3 micrometers for the micro drill. In the micrographs it can be observed that the electrolyte that presents a greater microstructural homogeneity of finish, with greater levelingleveling and with a fewer number of defects is the processing described in Example 1.2, which comprises an electrolyte based on DMSO in its non-conductive liquid phase. On the other hand, the one with a greater polishing depth and therefore a greater speed in terms of decreasing the machining marks, is the processing described in Example 1.3, which comprises an electrolyte based on octanoic acid in its non-conductive liquid phase. Therefore, an optimal method to obtain a good compromise between the speed of extraction of machining stripes and the homogeneity and microstructural leveling on the polished surface, deals with a process of various steps, comprising a first step of longer polishing duration depending on the requirement of radius in the cutting wire by means of an electrolyte based on octanite acid in its non-conductive liquid phase, and a final step (shorter polishing time) using an electrolyte based on DMSO or ethylene glycol in its non-conductive liquid phase.

As can be seen in Figure 10 it is possible to vary the final cutting radius depending on the polishing time. Increasing the polishing time increases this radius. This also has a similar correlation with respect to the K-factor.

According to the present invention, a tool with homogeneous surface polishing comprises in some implementations a radius in the cutting area between 2 and 20 microns; in some implementations between 2 and 10 microns, even in some cases, incorporating a radius with a value of about 5 microns.

According to the present invention, the tolerance between the cutting edge and the roughness change border of the tool in question comprises values between 100 and 2000 nm, for example, tolerance values between 250 and 750 nm and, in some implementations, a tolerance of about 500 nm.

The purpose of this invention is a machining tool or other type of part made of a ceramic-metal composite material, comprising, after polishing, a compressive tension of less than -400 MPa in order to increase the durability of the cutting tool or other type of part, its precision, while reducing the time and energy required in the machining process. Preferably, the compressive tension after polishing is less than -500 MPa, less than -1000MPa, less than -1500MPa, less than -2000MPa. In a concrete implementation of the invention the compressive tension after polishing is between -1600 and -1800 MPa.

The grinding process generates compressive stresses in the workpiece between -1500 and -2000MPa, usually between -1600 and -1800MPa. The machining tool or other type of part comprising a ceramic-metal composite material subject to the invention comprises, after polishing after grinding, a compressive tension of at least 25% of the compressive stresses prior to the polishing process. Preferably, the compressive tension after polishing is at least 40%, or 50%, or 60% or 70% or 80% or 90%, including 99% of compressive stresses prior to polishing. In a specific implementation of the invention, the compressive tension after polishing is between 80 and 90% of the compressive stresses generated during the grinding process.

In some implementations, the machining tool or other type of piece made from a ceramic-metal composite material demonstrates compressive stresses of at least 25% of the compressive stresses prior to the polishing process compared to other tools with equivalent roughness but polished by other polishing methods. Preferably, the compressive tension of the machining tool or other part made of a ceramic-metal composite material after polishing is at least 40%, or 50%, or 60% or 70% or 80% or 90%, even up to 99% of compressive stresses prior to polishing. In a specific implementation of the invention, the compressive tension of the machining tool or other type of part made of a ceramic-metal composite material after polishing is between 80 and 90% of the compressive stresses generated during the grinding process.

One implementation of the invention is shown in Figure 5 and Figure 7, where a machining tool is observed, specifically a tool for the extraction of material, as for example a bit in Figure 5 and an excavator shovel in Figure 7, comprising a ceramic-metal composite material with a homogeneous polishing as described in this descriptive report. In this implementation, the material extraction tool, such as a drill bit in Figure 5 and an excavator shovel in Figure 7, after polishing demonstrates a compressive tension of less than -400 MPa in order to increase the durability of the cutting tool or other type of part, its precision, while reducing the time and energy required in the machining process. Preferably, the compressive tension after polishing is less than -500 MPa, less than -1000MPa, less than -1500MPa, less than -2000MPa. The compressive tension after polishing is between -1600 and -1800MPa in a concrete implementation of the invention.

A machining tool is obtained thanks to this homogeneous polishing of the drill bit; for example, a drill bit or an excavator shovel, with greater durability than those polished by the methods known to date. The durability of machining tools is a key aspect in the maintenance and repair of machining machines. The replacement of machining tools about to reach the end of their useful life is scheduled in the maintenance and repair tasks of machining machines. The replacement of these machining tools implies, in most cases, a stopping of the machining machine with the economic costs that this shutdown entails.

In addition, thanks to the homogeneous polishing of the machining tool, such as the drill bit shown in Figure 5, a machining tool is obtained with greater precision and efficiency, which allows the reduction of the time and energy required in the machining process with respect to the machining processes, where polished machining tools are used with the processes known to date.

Another implementation of the invention is that shown in Figure 6, where a piece of motion transmission is observed, specifically a set of gears, comprising a ceramic-metal composite material with a homogeneous polishing as described in this descriptive report. In this implementation, the motion transmission part, specifically a set of gears, after polishing, demonstrates a compressive tension less than -400 MPa in order to increase the durability of the motion transmission part, specifically a set of gears. Preferably, the compressive tension after polishing is less than -500 MPa, less than -1000MPa, less than -1500MPa, less than - 2000MPa. The compressive tension after polishing is between -1600 and -1800MPa in a concrete implementation of the invention.

Thanks to this homogeneous polishing of the motion transmission part, such as a gear assembly, a motion transmission part is obtained with greater durability than those polished by the methods known to date. The durability of motion transmission parts is a key aspect in the maintenance and repair of the complex elements that comprise them. In the maintenance and repair of the complex elements that comprise them, such as an aircraft, the replacement of the motion transmission parts that are about to reach the end of their useful life is planned. The replacement of these motion transmission parts implies, in most cases, a stopping of the complex element that comprises it, such as an aircraft, with the economic costs that such a stop entails.

Also the purpose of this invention is a machining machine comprising a machining tool with a ceramic-metal composite material and a complex element comprising a part, for example, a motion transmission part, such as an aircraft, with a ceramic-metal composite material with homogeneous polishing as described in any section of the descriptive report. The machining tool, with a ceramic-metal composite material, comprised of the machining machine and, for example, a motion transmission part with a ceramic-metal composite material, comprising the complex element, such as an aircraft, after polishing, demonstrates a compressive tension of less than -400 MPa in order to increase the durability of the motion transmission part, specifically a gear set. Preferably, the compressive tension after polishing is less than - 500 MPa, less than -1000MPa, less than -1500MPa, less than -2000MPa. The compressive tension after polishing is between -1600 and -1800MPa in a concrete implementation of the invention.

In some implementations, the machining tool with a ceramic-metal composite material comprised of the machining machine and the motion transmission part with a ceramic-metal composite material with a homogeneous polishing comprised of a complex element, such as an aircraft, demonstrates compressive stresses of at least 25% of the compressive stresses prior to polishing compared to other tools with equivalent roughness, but polished by other polishing methods. Preferably, the compressive tension of the machining tool or other part made of a ceramic-metal composite material after polishing is at least 40%, or 50%, or 60% or 70% or 80% or 90%, even up to 99% of compressive stresses prior to polishing. In a specific implementation of the invention, the compressive tension of the machining tool or other type of part made of a ceramic-metal composite material after polishing is between 80 and 90% of the compressive stresses generated during the grinding process. Machining machines or complex elements comprising a machining tool or part comprising a homogeneously polished ceramic-metal composite material are more efficient compared to other machining machines or complex elements.

Machining machines, as well as complex elements comprising a machining tool with a homogeneously polished ceramic-metal composite material or a complex element, for example a motion transmission part, with a homogeneously polished ceramic-metal composite material, should not be stopped so often to perform the task of replacing the machining tool or the part comprising a ceramic-metal composite material that isevenly polished because it enjoys greater durability.

The replacement of machining tools or motion transmission parts about to reach the end of their useful life is scheduled in the maintenance and repair of machining machines or complex elements, such as aircraft. The replacement of these parts implies, in most cases, a stopping of the machining machine or the complex element that comprises it, such as an aircraft, with the economic costs that such a stop entails.

As shown in Figure 11, there are machining tools of a polished metal-ceramic composite material and then coated by, for example, ternary TiAlN-TiSiN-type coatings. In particular, the case shown in Figure 11 represents the ability of a polishing method by means of conductive solid particles to remove a Titanium Nitride (TIN) coating, increasing the polishing process. This implies the possibility of locally eliminating a possible area where the coating demonstrates defects (for example: drops, etc.), covering the rest of the tool. This prevents the catastrophic spread of the crack into the tool mold, so that after the subsequent coating, the tool can be re-subjected under operating conditions.

In some cases, particularly in those where the part to be machined by the tool comprises titanium alloys, the tool has K-factor = 0.7 - 0.8, retaining at least 40%, or 50%, or 60%, or 70%, or 80%, in turn, or 90%, or 99% of compressive stresses prior to polishing, and demonstrating a difference in heights between constituents (also known as flatness) of the nanometric order, and minimizing the defects of regrowth or localized attack in the metal mold. The features are discussed above. In particular, the invention places a tool for machining titanium alloys with K-factor = 0.7 - 0.8, with a nanometric flatness between the different constituents, demonstrating compressive stresses of approximately -500 to - 1800MPa. In particular, it demonstrates compressive voltages between -1000 and - 1750MPa, more particularly between -1400 and -1700MPa, specifically between -1600 and - 1700MPa.

In other cases, particularly where the part to be machined by the tool comprises other types of alloys, such as, for example, aluminum alloys, the tool has a factor of approximately K = 1, while retaining at least 40%, or 50%, or 60%, or 70 per cent, or 80 per cent, or 90%, or 99% of the compressive stresses prior to polishing, and demonstrating a nanometric leveling between the different constituents, minimizing the defects of regrowth or localized attack in the metal mold. In particular, the invention places a tool for machining titanium alloys with a factor of approximately K = 1, with a nanometric flatness between the different constituents, demonstrating compressive stresses of approximately -500 to -1800MPa. In particular, it demonstrates compressive voltages between -1000 and -1750MPa, more particularly between -1400 and -1700MPa, specifically between -1600 and -1700MPa.

Tools that have two ceramic phases embedded in a metal mold, known as GAMA phases, also fall within the scope of protection of these polished tools that do not manifest defects related to the finish due to a differential polishing between the different constituents.

Finally, this invention is also the subject of a machining process carried out with a machining tool, with a ceramic-metal composite material, as well as a motion transmission process with a piece with a ceramic-metal composite material. These processes are more efficient than processes not performed with a machining tool or part, with a ceramic-metal composite material homogeneously polished as described in the descriptive report, because such processes should not be stopped so often when these pieces enjoy greater durability. The replacement of these parts implies, in most cases, a stopping of the machining process or the process of transmission of motion of the machining machine or the complex element that comprises it with the economic costs that such a shutdown entails.

The machining tool, with a ceramic-metal composite material, used in a machining process and, for example, a motion transmission part with a ceramic-metal composite material, used in a motion transmission process, after polishing, demonstrates a compressive tension lower than -400MPa in order to increase the durability of the motion transmission part, specifically a set of gears. Preferably, the compressive tension after polishing is less than -500MPa, less than -1000MPa, less than -1500MPa, less than -2000MPa. The compressive tension after polishing is between -1600 and -1800MPa in a concrete implementation of the invention.

In some implementations, the machining tool with a ceramic-metal composite material used in a machining process and the motion transmission part with a ceramic-metal composite material with a homogeneous polishing used in a motion transmission process, demonstrates compressive stresses of at least 25% of the compressive stresses prior to polishing compared to other tools with equivalent roughness, but polished by other polishing methods. Preferably, the compressive tension of the machining tool or other part made of a ceramic-metal composite material after polishing is at least 40%, or 50%, or 60% or 70% or 80% or 90%, or 99% of compressive stresses prior to polishing. In a specific implementation of the invention, the compressive tension of the machining tool or other type of part made of a ceramic-metal composite material after polishing is between 80 and 90% of the compressive stresses generated during the grinding process. Having sufficiently described the nature of the present invention, as well as the way to put it into practice, it is not considered necessary to extend its explanation so that any expert in the field understands its scope and the derived advantages.

### EXAMPLES

In order to exemplify the characteristics of some cutting tools that fall within the scope of the present invention, together with their corresponding polishing process, the following cases or examples are described below:

### Example 1

An electropolishing process has been carried out by conductive solid particles (dry electropolishing) on a machining milling cutter and on a micro drill, manufactured by a ceramic-metal composite material based on WC tungsten carbide and with a cobalt metal binder.

A process of immersion of the part, connected to the first power supply point, has been performed inside a tank filled with a dry electrolyte together with a platinum titanium meshed perimeter cathode, connected to the second power supply point. Rotational vibration has been applied along the longitudinal axis of 1 mm amplitude and with a frequency of 10 Hz to the vessel, in order to ensure the motion or recirculation of the conductive solid particles of the dry electrolyte located within the cylindrical vessel; with a capacity of 1L.

Two synchronized cyclic motions have been made; the first, linear in the direction of the tool's longitudinal axis and in the direction perpendicular to that of the dry electrolyte surface, with a frequency of 30 r.p.m and an amplitude in the order of the tool length; at the same time also the second, a rotational motion around the longitudinal axis of the piece, of 180° and also at a frequency of 30 rpm

Specific electrical parameters have been applied. 20 V during an anodic pulse, taking the piece as a reference and lasting 20 microseconds. 50 V during a cathode pulse, taking the piece as a reference and lasting 160 microseconds. Performing a time of 0 V between each polarity change and a duration of 10 microseconds.

The composition of the electrolyte with which the pieces have been polished is detailed below, named as different versions of **Example 1:**

### Example 1.1

The polishing process described in the example, using an electrolyte called L800, with the following composition:
- 500 g of conductive solid particles comprising:
   ∘ 95.65% by weight of particles styrene divinylbenzene sulphonated gel (Mitsubishi Relite CFH) 0.3 to 1.18 mm in diameter with a hydration of 55% by weight in water after a washing process by deionized water (at a temperature above 100 °C) until a pH of the washing water is obtained between 4.5 - 6, and a subsequent drying process.
   ∘ 4.35% of a weak-base anion exchange resin composed of an acrylic spine crosslinked with divinylbenzene and functionalized with a tertiary amine (Dupont Amberlite IRA67 Resin) with a hydration of 55% by weight, acting as a chemical moderating particle.
- 239 g of a non-conductive fluid comprising:
   ∘ 90.91% by weight of distilled water
   ∘ 9.09% by weight polydimethylsiloxane (PDMS)

The result obtained can be seen in Figures 8 and 9.

### Example 1.2

The polishing process described in the example, using an electrolyte called L803, with the following composition:
- 500 g of conductive solid particles comprising:
   ∘ 89.11% by weight of particles styrene divinylbenzene sulphonated gel (Mitsubishi Relite CFH) 0.3 to 1.18 mm in diameter with a hydration of 55% by weight in water after a washing process by deionized water (at a temperature above 100 °C) until a pH of the washing water is obtained between 4.5 - 6, and a subsequent drying process.
   ∘ 9.90% by weight of 0.3 mm diameter divinylbenzene styrene gel (Lewatit Relite CFH) with a hydration of 55% by weight in water after a sulfuric acid acidification process and after subsequent washing by deionized water (at a temperature above 100 °C) until a pH of the washing water is obtained between 4.5 - 6, and a subsequent drying process.
   ∘ 0.99% of a weak-base anion exchange resin composed of an acrylic spine crosslinked with divinylbenzene and functionalized with a tertiary amine (Dupont Amberlite IRA67 Resin) with a hydration of 55% by weight, acting as a chemical moderating particle.
- 167 g of a non-conductive fluid comprising:
   ∘ 33.33% by weight of distilled water
   ∘ 66.67% by weight of Dimethylsulfoxide (DMSO)

The result obtained can be seen in Figures 8 and 9.

### Example 1.3

The polishing process described in the example, using an electrolyte called L807, with the following composition:
- 500 g of conductive solid particles comprising:
   ∘ 90% by weight of particles styrene divinylbenzene sulphonated gel (Mitsubishi Relite CFH) 0.3 to 1.18 mm in diameter with a hydration of 55% by weight in water after a washing process by deionized water (at a temperature above 100 °C) until a pH of the washing water is obtained between 4.5 - 6, and a subsequent drying process.
   ∘ 1% of a weak-base anion exchange resin composed of an acrylic spine crosslinked with divinylbenzene and functionalized with a tertiary amine (Dupont Amberlite IRA67 Resin) with a hydration of 55% by weight, acting as a chemical moderating particle.
- 233 g of a non-conductive fluid comprising:
   ∘ 43.48% by weight of distilled water
   ∘ 56.52% by weight of octanoic acid of 98% purity.

The result obtained can be seen in Figures 8 and 9.

### Example 1.4

The polishing process described in the example, using an electrolyte called L808, with the following composition:
- 500 g of conductive solid particles comprising:
   ∘ 72.36% by weight of particles styrene divinylbenzene sulphonated gel (Mitsubishi Relite CFH) 0.3 to 1.18 mm in diameter with a hydration of 55% by weight in water after a washing process by deionized water (at a temperature above 100 °C) until a pH of the washing water is obtained between 4.5 - 6, and a subsequent drying process.
   ∘ 16.06% by weight of sulphonated styrene gel particles (Mitsubishi Relite CFH) from 0.3 to 1.18 mm in diameter, crushed to various shapes and sizes by two rolling rollers, with a hydration of 55% by weight in water after a washing process by deionized water (at a temperature above 100 °C) until a pH of the washing water between 4.5 - 6, and a subsequent drying process.
   ∘ 8.04% by weight of 0.3 mm diameter divinylbenzene styrene gel (Lewatit Relite CFH) with a hydration of 55% by weight in water after a sulfuric acid acidification process and after subsequent washing by deionized water (at a temperature above 100°C) until obtaining a pH of the washing water between 4.5 - 6, and a subsequent drying process.
   ∘ 3.23% by weight of glass microspheres (silicon oxide) with a diameter of between 0.04 and 0.07 micrometers.
   ∘ 0.31% of a weak-base anion exchange resin composed of an acrylic spine crosslinked with divinylbenzene and functionalized with a tertiary amine (Dupont Amberlite IRA67 Resin) with a hydration of 55% by weight, acting as a chemical moderating particle.
- 5 g of a non-conductive fluid comprising octanoic acid of 99% purity.

The obtained result can be seen in Figures 8 and 9.

## Claims

1. Machining tool or other type of part comprising a ceramic-metal composite material **characterized for** comprising homogeneous surface polishing.

2. Machining tool or other type of part according to Claim 1 **characterized for** filing a homogeneous surface polishing along the cutting edge, i.e. a flatness between the metal elements and the ceramic elements of the tool, in such a way that the roughness of the cutting edge of the tool is of the submicrometric order.

3. Machining tool or other type of part according to Claim 1, **characterized because** the roughness of the surface polishing is below 20 nm.

4. Machining tool or other type of part according to Claim 1, **characterized because** the roughness of the surface polishing is below 15 nm.

5. Machining tool or other type of part according to Claim 1, **characterized because** the roughness of the surface polishing is below 10 nm.

6. Machining tool or other type of part according to Claim 1, **characterized becausethe** roughness of the surface polishing is below 9 nm.

7. Machining tool or other type of part according to any of the above claims **characterized because** the ceramic-metal material comprises one or more of the following group of materials: tungsten carbide ((WC), W(Ti,Ta)C-Co, Ti(C,N)-FeNi, among other carbides with metal binders base cobalt, nickel, iron, chromium or combinations thereof in different proportions.

8. Machining tool or other type of part according to any of the above claims **characterized because** the change of roughness between the cutting edge and the faces adjacent to the cutting edge along the cutting edge of the tool is homogeneous or regular.

9. Machining tool or other type of part according to any of the above claims **characterized because** it demonstrates, after polishing, a compressive tension less than -500 MPa or more than 25% of the compressive stresses generated during the grinding process.

10. Machining process by means of a machining tool comprising a ceramic-metal composite material **characterized because** the machining tool comprising a homogeneous surface polishing.

11. Machining process according to Claim 10 **characterized because** the machining tool along the cutting edge demonstrates homogeneous surface polishing, that is to say a perfect flatness between the metal elements and the ceramic elements of the tool, in such a way that the roughness of the cutting edge of the tool is of the submicrometric order.

12. Machining process according to Claim 11 **characterized because** the machining tool along the cutting edge demonstrates a homogeneous surface polishing below 20 nm.

13. Machining process according to Claim 12 **characterized because** the machining tool along the cutting edge demonstrates a homogeneous surface polishing below 15 nm.

14. Machining process according to Claim 13 **characterized because** the machining tool along the cutting edge demonstrates a homogeneous surface polishing below 10 nm.

15. Machining process according to Claim 14 **characterized because** the machining tool along the cutting edge demonstrates a homogeneous surface polishing below 9 nm.

16. Machining process according to any of Claims 10-15 **characterized because** the ceramic-metal material of the machining tool comprises one or more of the following group of materials: tungsten carbide ((WC), W(Ti,Ta)C-Co, Ti(C,N)-FeNi, among other carbides with metal binders base cobalt, nickel, iron, chromium or combinations of them in different proportions.

17. Machining process according to any of Claims 10-16 **characterized because** the change of roughness between the cutting edge and the faces adjacent to the cutting edge along the cutting edge of the tool is homogeneous or regular.

18. Machining process according to any of Claims 10-16 **characterized because** the tool demonstrates, after polishing, a compressive tension less than -500 MPa or more than 25 of the compressive stresses generated during the grinding process.

19. Process of transmission of motion by means of a motion transmission part comprising a ceramic-metal composite material **characterized because** the motion transmission part comprises a homogeneous surface polishing.

20. Motion transmission process according to Claim 19 **characterized because** the ceramic-metal material of the machining tool comprises one or more of the following group of materials: tungsten carbide ((WC), W(Ti,Ta)C-Co,Ti(C,N)-FeNi, among other carbides with metal binders base cobalt, nickel, iron, chromium or combinations thereof in different proportions.

21. Motion transmission process according to Claim 19 **characterized because** the motion transmission part demonstrates, after polishing, between 80 and 90% of the compressive stresses generated during the grinding process.

22. Machining machine **characterized because** it comprises a machining tool with homogeneous surface polishing.

23. Machining machine according to Claim 22 **characterized because** the machining tool along the cutting edge demonstrates a homogeneous surface polishing, i.e. a flatness between the metal elements and the ceramic elements of the tool, in such a way that the roughness of the cutting edge of the tool is of the submicrometric order.

24. Machining machine according to Claim 22 **characterized because** the roughness of the surface polishing of the machining tool is below 20 nm, below 15 nm, below 10 nm or below 9 nm.

25. Machining machine according to any of Claims 22-24 **characterized because** the machining tool, due to the ceramic-metal material, comprises one or more of the following group of materials: tungsten carbide ((WC), W(Ti,Ta)C-Co,Ti(C,N)-FeNi, among other carbides with metal binders based cobalt, nickel, iron, chromium or combinations thereof in different proportions.

26. Machining machine according to any of Claims 22-25 **characterized because** the machining tool demonstrates the change of roughness between the cutting edge and the faces adjacent to the cutting edge along the cutting edge of the tool is homogeneous or regular.

27. Machining machine according to any of Claims 22-26 **characterized because** the machining tool demonstrates, after polishing, between 80 and 90% of the compressive stresses generated during the grinding process.

28. A complex element, such as an aircraft, **characterized because** it comprises a motion transmission part with a homogeneous surface polishing.

29. A complex element according to Claim 28 **characterized because** a piece of motion transmission demonstrates at least part of its surface as homogeneous surface polishing, i.e. a flatness between the metal elements and the ceramic elements of the tool, in such a way that the roughness of the cutting edge of the tool is of the submicrometric order.

30. A complex element according to Claim 28 **characterized because** the roughness of the surface polishing of the motion transmission part is below 20 nm, below 15 nm, below 10 nm or below 9 nm.

31. Complex element according to any of Claims 28-30 **characterized because** the machining tool because the ceramic-metal material is one or more of the following group of materials: tungsten carbide ((WC), W(Ti,Ta)C-Co, Ti(C,N)-FeNi, among other carbides with metal binders base cobalt, nickel, iron, chromium or their combinations in different proportions.

32. Complex element according to any of Claims 28-31 **characterized because** the machining tool demonstrates, after polishing, a compressive tension less than - 500 MPa or more than 25% of the compressive stresses generated during the grinding process.
